# EUROPÄISCHE PATENTANMELDUNG

(11) **EP 1 203 889 A1**
(43) Veröffentlichungstag der Anmeldung: **08.05.2002**
(21) Anmeldenummer: 01811029.6
(22) Anmeldetag: 22.10.2001
(51) Int. Cl.: F16B 13/06

(54) **Spreizanker aus Metall**

(30) Priorität: 03.11.2000 DE 10054618
(71) Anmelder: HILTI Aktiengesellschaft, 9494 Schaan (LI)
(72) Erfinder: Kaibach, Werner, 86807 Buchloe (DE); Raber, Stefan, 86916 Kaufering (DE); Eckstein, Andreas, 86899 Landsberg am Lech (DE)
(74) Vertreter: Wildi, Roland

(57) **Zusammenfassung**

Ein Befestigungsmittel weist ein an einem Schaft (1) angeordneten Spreizhülse (4) auf. Die Spreizhülse (4) besitzt mehrere in Setzrichtung (S) hintereinander angeordnete Sperrelemente (15), die einen dreickförmigen Querschnitt aufweisen. Das Befestigungselement eignet sich durch die Dimensionierung und Anordnung der Sperrelemente (15) sowohl für einen gerissenen als auch für ungerissenen Untergrund.

## Beschreibung

Die Erfindung betrifft ein Befestigungselement zur Verankerung im Bohrloch eines Untergrundes mit einem Schaft, der an seinem der Setzrichtung abgewandten Endbereich ein Lastangriffsmittel und am gegenüberliegenden Endbereich einen Spreizkonus zum Aufspreizen einer Spreizhülse aufweist, die den Schaft zumindest teilweise umfasst und wenigstens einen, Spreizsegmente bildenden, in Setzrichtung offenem Längsschlitz aufweist, wobei die Spreizsegmente Sperrelemente aufweisen, welche die Aussenkontur der Spreizhülse mit einer Höhe radial überragen.

Derartige Befestigungselemente sind insbesondere für den Einsatz in harten Untergründen geeignet, wobei durch Aufdrehen einer Mutter auf den das Bauteil und den zu befestigenden Gegenstand überragenden Schaft der am Schaft angeformte Spreizkonus in die an eine Bohrlochwandung sich abstützende Spreizhülse eingezogen wird. Die Spreizhülse weitet sich dabei auf und verkeilt sich im Bohrloch. Die Abstützung der Spreizhülse im Bohrloch wird durch an ihr angeordnete Sperrelemente erreicht, die sich an der Bohrlochwandung verhaken. Die Aufweitung der Spreizhülse wird üblicherweise durch mehrere Längsschlitze ermöglicht. Durch die Längsschlitze werden Spreizsegmente ausgebildet, die am Ende der Längsschlitze in die geschlossene Hülsenform übergehen.

Aus der DE-A1-4344244 ist beispielsweise ein Befestigungselement der genannten Art bekannt, das einen Schaft mit einem Spreizkonus zum Verspreizen des Spreizelementes aufweist. Durch Prägungen weisen die Spreizsegmente jeweils mehrere, in Setzrichtung hintereinander angeordnete, Sperrelemente auf. Die Sperrelemente weisen eine Dreiecksform mit einer in Setzrichtung weisenden Spitze auf.

Nachteilig an dieser bekannten Lösung ist, dass das Befestigungselement auf einen Untergrund mit gerissenem Beton optimiert ist und dadurch in ungerissenem Beton nicht die gewünschten Lastwerte aufweist.

Der vorliegenden Erfindung liegt die Aufgabe zugrunde, ein Befestigungselement mit einem Schaft, der an seinem der Setzrichtung abgewandten Endbereich ein Lastangriffsmittel und am gegenüberliegenden Endbereich einen Spreizkonus zum Aufspreizen einer Spreizhülse aufweist, zu schaffen, der sowohl im gerissenen als auch im ungerissenen Untergrund hohe Haltewerte aufweist. Ausserdem soll die Herstellung des Befestigungselementes wirtschaftlich sein.

Erfindungsgemäss wird die Aufgabe dadurch gelöst, dass die Spreizsegmente je zwei, in Setzrichtung in einem Abstand hintereinander angeordnete, Sperrelemente aufweisen.

Dadurch, dass die Spreizsegmente je zwei, in Setzrichtung in einem Abstand hintereinander angeordnete, in einer durch die Längsachse des Schaftes verlaufende Schnittebene einen im wesentlichen gleichförmigen Querschnitt besitzende, Sperrelemente aufweisen, ist das Befestigungselement sowohl für gerissenen als auch ungerissenen Untergrund, insbesondere Beton, geeignet. Die vordere Rippe kommt als erstes in Eingriff. Sie dient vor allem dazu, im Falle von hochfestem Beton in Verbindung mit einem beispielsweise abgenutzten Bohrer eine sichere Verankerung zu erzielen. In diesem besonderen Fall ist das Bohrloch verhältnismässig klein ausgebildet. Ein bei einem Setzvorgang aufgebrachtes Drehmoment muss so hoch sein, dass die vordere Rippe vollständig in den Untergrund, insbesondere Beton, gedrückt wird. Die vorderste Rippe verläuft vorzugsweise über den gesamten Umfang des Spreizsegmentes. Die hintere Rippe dient vor allem dazu, im Falle von niedrigfestem Untergrund, insbesondere Beton, in Verbindung mit einem verhältnismässig grossen Bohrloch, eine sichere Verankerung im Untergrund zu erzielen. Die hintere Rippe verläuft zumindest teilweise über den Umfang des Spreizsegmentes. Im Falle eines gerissenen Untergrundes wirken beide Rippen, sowohl die vordere als auch die hintere Rippe, gemeinsam und verhindern ein Herauswandern des Befestigungselementes.

Vorzugsweise überragen die Sperrelemente die Aussenkontur der Spreizhülse um eine Höhe, die dem 0,02- bis 0,1-fachen, insbesondere 0,03- bis 0,05-fachen, des Kernmessers der Spreizhülse entspricht, um einen optimalen Eingriff in den Untergrund zu gewährleisten.

Um ein optimales Lastverhalten sowohl in gerissenem und ungerissenem Untergrund sicherzustellen, entspricht der Abstand vorteilhafterweise dem 0,2- bis 1,5-fachen, insbesondere 0,5- bis 0,7-fachen, des Kernmessers der Spreizhülse. Der Abstand spielt eine wesentliche Rolle, um eine möglichst gleichmässige Einleitung der Kräfte in den Untergrund zu gewährleisten. Dabei ist jedoch sicherzustellen, dass der Untergrund im Bereich der Sperrelemente nicht geschwächt oder gar zerstört wird. Sind die Sperrelemente zu weit voneinander entfernt angeordnet, so erfolgt eine punktuelle Einleitung der Kräfte. Andererseits wird der Untergrund im Bereich der Sperrelemente geschwächt oder gar zerstört, falls diese zu nah zueinander angeordnet sind.

Vorteilhafterweise weisen die Sperrelemente in einer, durch die Längsachse des Schaftes verlaufenden, Schnittebene einen dreieckförmigen Querschnitt auf, um einen optimalen Eingriff in den Untergrund sicherzustellen. Bei der Geometrie muss berücksichtigt werden, dass keine Schwächung des in Setzrichtung vom Sperrelement abgewandten Bereichs erfolgt. Insbesondere ist der Querschnitt als gleichseitiges Dreieck ausgebildet.

In einer anderen bevorzugten Ausführungsform weisen die Sperrelemente in einer, durch die Längsachse des Schaftes verlaufenden, Schnittebene einen rechteckigen Querschnitt auf. Vor allem in eher weichem Untergrund wirkt sich diese Ausführungsform vorteilhaft aus.

Vorteilhafterweise weist der Spreizkonus einen zylinderförmigen Abschnitt aufweist, wobei die Länge des zylinderförmigen Abschnittes dem 0,3 bis 1,5-fachen, insbesondere dem 0,6-bis 0,9-fachen, des Abstandes entspricht, um eine optimale Kraftübertragung zwischen dem Spreizkonus und der Spreizhülse sicherzustellen. Selbstverständlich kann der Spreizkonus bei Sperrelementen mit ungleichen Höhen, der zylinderförmige Abschnitt eine leicht runde Aussengeometrie aufweisen um die Krafteinleitung zu optimieren.

Die Erfindung wird nachstehend anhand eines Ausführungsbeispieles näher erläutert. Es zeigen:
- Fig. 1: eines erfindungsgemässes Befestigungselement im Querschnitt;
- Fig. 2: ein vergrössert dargestelltes Spreizelement des Befestigungselementes der Fig. 1.

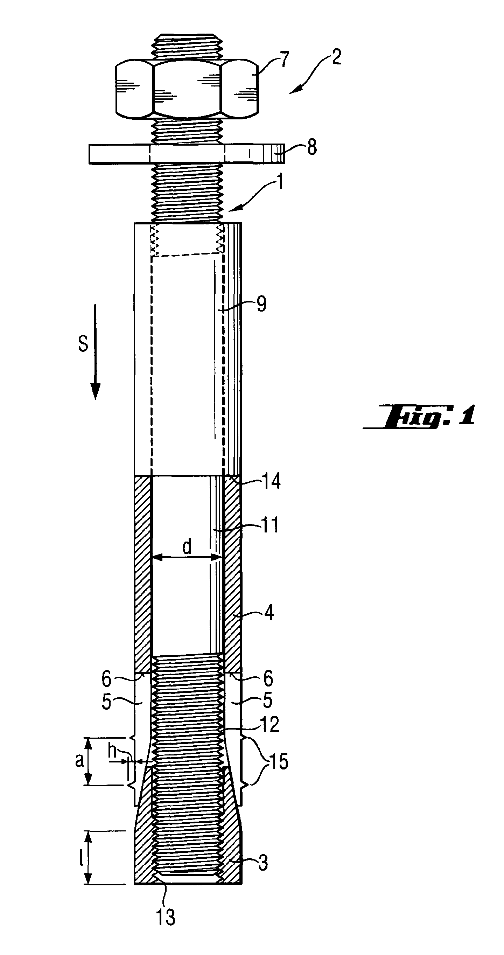

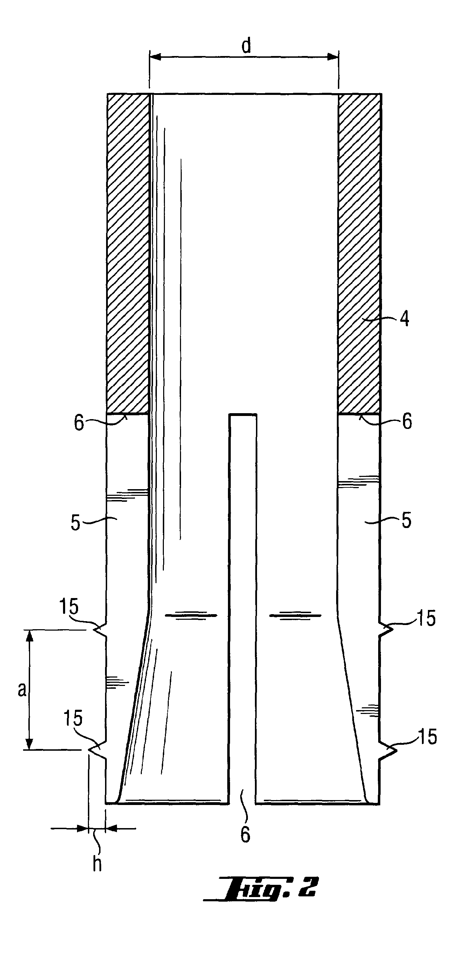

In den Fig. 1 und 2 ist ein erfindungsgemässes Befestigungselement mit einem Schaft 1, der an seinem der Setzrichtung S abgewandten Endbereich ein Lastangriffsmittel 2 und am gegenüberliegenden Endbereich einen Spreizkonus 3 zum Aufspreizen einer Spreizhülse 4 aufweist, dargestellt. Der Schaft 1 wird von der Spreizhülse 4 umfasst und weist wenigstens einen, Spreizsegmente 5 bildenden, Längsschlitz 6 auf.

Der Schaft 1 ist als Gewindeschaft ausgebildet, auf den eine Mutter 7 mit einer Unterlagsscheibe 8 aufschraubbar ist, wie dies insbesondere aus Fig. 1 ersichtlich ist. Der Schaft 1 weist anschliessend an das Lastangriffsmittel 2 eine Querlastbereich 9 auf. Zwischen dem Spreizkonus 3 und dem Querlastbereich 9 weist dieser ferner einen Aufnahmebereich 11 zur Führung der Spreizhülse 4 auf. Der Aufnahmebereich 11 weist einen geringeren Aussendurchmesser auf als der Querlastbereich 9. Ferner weist der Aufnahmebereich 11 an seinem setzrichtungsseitigen Ende ein als Verbindungsmittels dienendes Aussengewinde 12 auf, auf das der mit einem Innengewinde 13 versehene Spreizkonus 3 aufschraubbar ist. Der Schaft 1 und der Querlastbereich 9 können einteilig ausgebildet sein.

Die Spreizhülse 4 weist insgesamt etwa denselben Aussendurchmesser wie der Querlastbereich 9 auf. Die in Setzrichtung S abgewandte Stirnseite der Spreizhülse 4 wirkt mit einer ringförmigen Anschlagschulter 14 des Querlastbereiches 9 als Anschlag zusammen. Die Längsschlitze 6 sind in Setzrichtung S offen ausgebildet, wie dies insbesondere aus Fig. 2 ersichtlich ist.

Die Spreizsegmente 5 weisen Sperrelemente 15 auf, welche die Aussenkontur der Spreizhülse 4 mit einer Höhe h radial überragen. Dabei weisen die Spreizsegmente 5 jeweils zwei in Setzrichtung S in einem Abstand a hintereinander angeordnete Sperrelemente 15 auf. Wobei die Höhe (h) dem 0,03- bis 0,05-fachen und der Abstand a dem 0,5- bis 0,7-fachen des Kernmessers d der Spreizhülse 3 entspricht. Der Querschnitt einer, durch die Längsachse des Schaftes 1 verlaufenden, Schnittebene durch die Sperrelemente 15 ist dreieckförmig ausgebildet. Das in Setzrichtung S angeordnete Sperrelement 15 weist eine Höhe h auf, die grösser ist als die des in Setzrichtung S abgewandten Sperrelements 15.

Der Spreizkonus 3 weist in Setzrichtung S einen zylinderförmigen Abschnitt mit einer Länge auf, die dem 0,6- bis 0,9-fachen des Abstandes a entspricht. Der zylindrische Abschnitt des Spreizkonus 3 ist leicht gerundet um eine gleichmässige Krafteinleitung der Sperrelemente 15 in einen nicht dargestellten Untergrund sicherzustellen.

## Patentansprüche

1. Befestigungselement zur Verankerung im Bohrloch eines Untergrundes mit einem Schaft (1), der an seinem der Setzrichtung (S) abgewandten Endbereich ein Lastangriffsmittel (2) und am gegenüberliegenden Endbereich einen Spreizkonus (3) zum Aufspreizen einer Spreizhülse (4) aufweist, die den Schaft (1) zumindest teilweise umfasst und wenigstens einen, Spreizsegmente (5) bildenden, in Setzrichtung (S) offene Längsschlitz (6) aufweist, wobei die Spreizsegmente (5) Sperrelemente (15) aufweisen, welche die Aussenkontur der Spreizhülse (4) mit einer Höhe (h) radial überragen, **dadurch gekennzeichnet, dass** die Spreizsegmente (5) je zwei, in Setzrichtung (S) in einem Abstand (a) hintereinander angeordnete, in einer durch die Längsachse des Schaftes verlaufende Schnittebene einen im wesentlichen gleichförmigen Querschnitt besitzende, Sperrelemente (15) aufweisen.

2. Befestigungselement nach Anspruch 1, **dadurch gekennzeichnet, dass** die Sperrelemente (15) die Aussenkontur der Spreizhülse (4) um eine Höhe (h) überragen, die dem 0,02- bis 0,1-fachen des Kernmessers (d) der Spreizhülse (4) entspricht.

3. Befestigungselement nach Anspruch 2, **dadurch gekennzeichnet, dass** die Sperrelemente (15) die Aussenkontur der Spreizhülse (4) um eine unterschiedliche Höhe (h) überragen.

4. Befestigungselement nach einem der Ansprüche 1 bis 3, **dadurch gekennzeichnet, dass** der Abstand (a) dem 0,2- bis 1,5-fachen des Kernmessers (d) der Spreizhülse (4) entspricht.

5. Befestigungselement nach Anspruch 4, **dadurch gekennzeichnet, dass** der Abstand (a) dem 0,5- bis 0,7-fachen des Kernmessers (d) der Spreizhülse (4) entspricht.

6. Befestigungselement nach einem der Ansprüche 1 bis 5, **dadurch gekennzeichnet, dass** die Sperrelemente (15) in einer, durch die Längsachse des Schaftes (1) verlaufenden, Schnittebene einen dreieckförmigen Querschnitt aufweisen.

7. Befestigungselement nach einem der Ansprüche 1 bis 5, **dadurch gekennzeichnet, dass** die Sperrelemente (15) in einer, durch die Längsachse des Schaftes (1) verlaufenden, Schnittebene einen rechteckigen Querschnitt aufweisen.

8. Befestigungselement nach einem der Ansprüche 1 bis 7, **dadurch gekennzeichnet, dass** der Spreizkonus (3) einen zylinderförmigen Abschnitt aufweist, wobei die Länge I des zylinderförmigen Abschnittes dem 0,3 bis 1,5-fachen des Abstandes (a) entspricht.
